(19) Europäisches Patentamt
European Patent Office
Office européen des brevets

(11) **EP 4 775 615 A1**

(12) **EUROPEAN PATENT APPLICATION**
published in accordance with Art. 153(4) EPC

(43) Date of publication:
**15.07.2026 Bulletin 2026/29**

(21) Application number: **24900977.0**

(22) Date of filing: **29.11.2024**

(51) International Patent Classification (IPC):
***C08G 64/34*** *(2006.01)* ***C08L 69/00*** *(2006.01)*
***C08K 5/00*** *(2006.01)* ***C08G 65/26*** *(2006.01)*

(52) Cooperative Patent Classification (CPC):
**C08G 64/34; C08G 65/26; C08K 5/00; C08L 69/00**

(86) International application number:
**PCT/KR2024/019235**

(87) International publication number:
**WO 2025/121791 (12.06.2025 Gazette 2025/24)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **04.12.2023 KR 20230173506**

(71) Applicant: **LG Chem, Ltd.**
**Seoul 07336 (KR)**

(72) Inventors:
- **LIM, Seo Yeon**
  **Daejeon 34122 (KR)**
- **SHIN, Bo Ra**
  **Daejeon 34122 (KR)**
- **KIM, Sang Woo**
  **Daejeon 34122 (KR)**
- **PARK, No Jin**
  **Daejeon 34122 (KR)**
- **SEO, Joon Sik**
  **Daejeon 34122 (KR)**

(74) Representative: **Plasseraud IP**
**104 Rue de Richelieu**
**CS92104**
**75080 Paris Cedex 02 (FR)**

# (54) POLYALKYLENE CARBONATE-BASED RESIN AND METHOD FOR PRODUCING SAME

(57) The present invention relates to a polyalkylene carbonate-based resin having excellent heat stability and a method for producing the same, and provides a polyalkylene carbonate-based resin comprising: a repeating unit represented by Chemical Formula 1; a repeating unit represented by Chemical Formula 2; and an organic acid anhydride-derived unit, wherein the polyalkylene carbonate-based resin has a peak in the region of 6.3 ppm to 6.7 ppm in a $^1$H NMR spectrum, and a method for producing the same.

[FIG. 1]

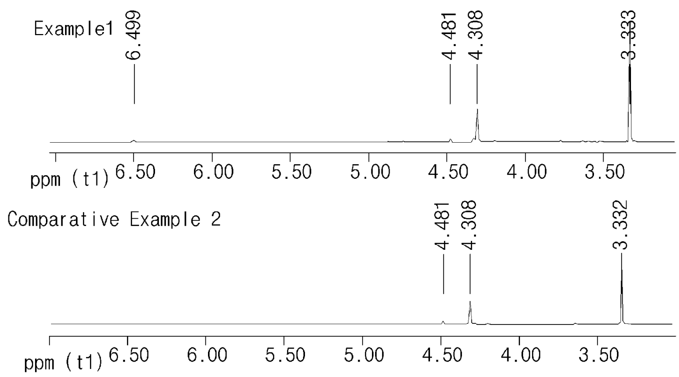


EP 4 775 615 A1

## Description

### [Technical Field]

### CROSS-REFERENCE TO RELATED APPLICATION

The present application claims priority to Korean Patent Application No. 10-2023-0173506, filed on December 4, 2023, the entire content of which is incorporated herein for all purposes by reference.

### Technical Field

The present invention relates to a polyalkylene carbonate-based resin having excellent thermal stability and a method for producing the same.

### [Background Art]

Since the Industrial Revolution, mankind has built a modern society by consuming a large amount of fossil fuels, but the concentration of carbon dioxide in the atmosphere is increasing due to environmental destruction such as deforestation. Since an increase in the concentration of carbon dioxide is a cause of increasing the greenhouse effect, it is important to reduce the concentration of carbon dioxide in the atmosphere, which has a high rate of contribution to global warming, and various studies are being conducted on the regulation or fixation of carbon dioxide emissions.

Recently, polyalkylene carbonate resins produced by polymerization of carbon dioxide and epoxide have been receiving much attention as a kind of biodegradable resin. In particular, the process of producing polyalkylene carbonate resins using carbon dioxide can reduce global warming problems by fixing carbon dioxide in the atmosphere, and is also being actively studied from the viewpoint of use as a carbon resource.

However, due to low thermal stability, they undergo thermal decomposition at a temperature of 180°C or more, which greatly limits their industrial application.

Therefore, research is needed to improve the thermal stability of the polyalkylene carbonates.

### [Prior Art Literature]

(Patent Document 1) CN 103842406 B (November 02, 2016)

### [Disclosure]

### [Technical Problem]

An object of the present invention is to provide a polyalkylene carbonate-based resin having excellent thermal stability.

Another object of the present invention is to provide a method for producing the polyalkylene carbonate-based resin.

### [Technical Solution]

In order to solve the above problems, the present invention provides a polyalkylene carbonate-based resin and a method for producing the same.

More specifically, (1) the present invention provides a polyalkylene carbonate-based resin comprising: a repeating unit represented by Chemical Formula 1 below; a repeating unit represented by Chemical Formula 2 below; and a maleic anhydride-derived unit, wherein the polyalkylene carbonate-based resin has a peak in the region of 6.3 ppm to 6.7 ppm in a $^1H$ NMR spectrum:

[Chemical Formula 1]

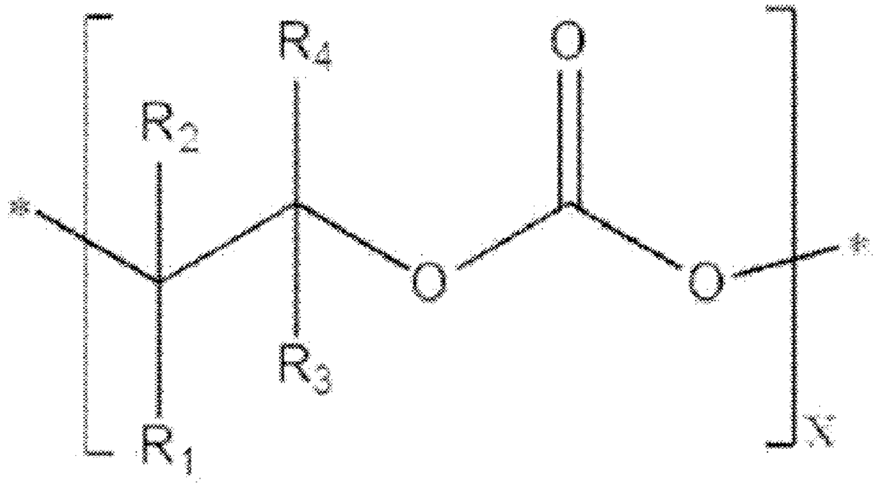

[Chemical Formula 2]

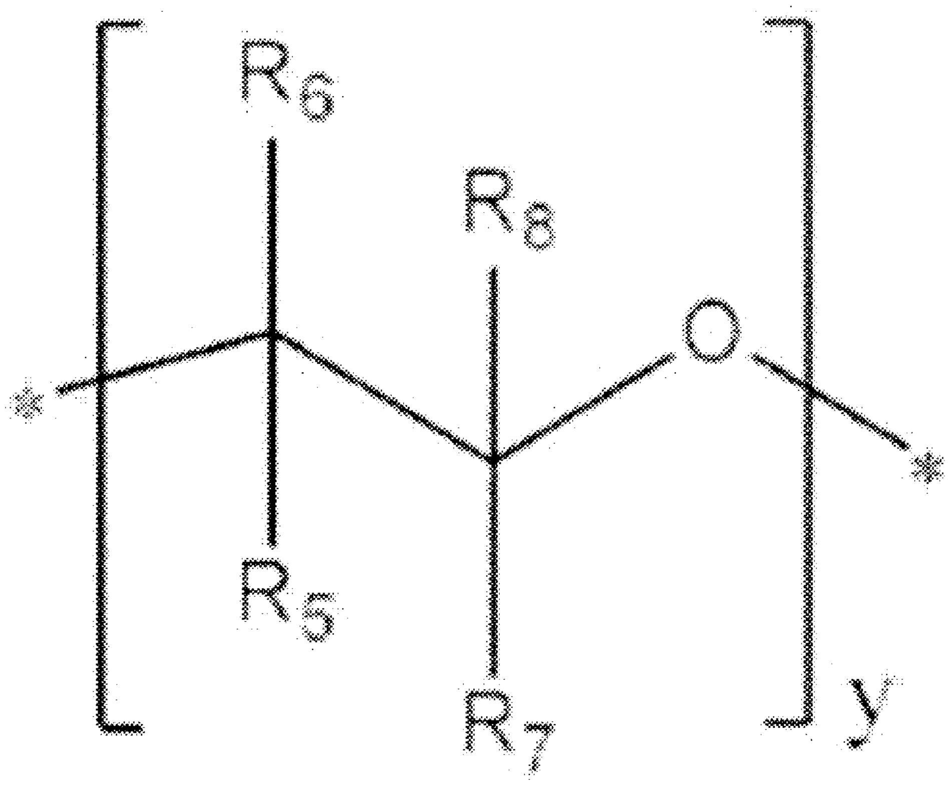

wherein:

$R_1$ to $R_8$ are each independently hydrogen, a linear alkyl group having 1 to 20 carbon atoms, a branched alkyl group having 3 to 20 carbon atoms, an aryl group having 6 to 20 carbon atoms, an alkenyl group having 2 to 20 carbon atoms, or a cycloalkyl group having 3 to 20 carbon atoms,
* denotes a linking site between repeating units, and
x and y are mole fractions, wherein x is 0.70 to 1.00, y is 0.00 to 0.30, and x+y is 1.

(2) The present invention provides the polyalkylene carbonate-based resin according to (1) above, characterized in that the melt index measured under the conditions of 190°C and 6.835 kg according to ASTM D1238 is 1 g/10 min or more and 25 g/10 min or less.

(3) The present invention provides the polyalkylene carbonate-based resin according to (1) or (2) above, characterized in that the mass change rate when stored at 240°C for 60 minutes is 80 wt% or less.

(4) The present invention provides the polyalkylene carbonate-based resin according to any one of (1) to (3) above, characterized in that the glass transition temperature is -10°C or more and 50°C or less.

(5) The present invention provides the polyalkylene carbonate-based resin according to any one of (1) to (4) above, characterized in that the thermal decomposition temperature (Td50) is 290°C or more.

(6) The present invention provides the polyalkylene carbonate-based resin according to any one of (1) to (5) above, wherein the maleic anhydride-derived unit is included in an amount of 1 to 50 parts by weight based on 100 parts by weight of the polyalkylene carbonate-based resin.

(7) The present invention provides a polyalkylene carbonate-based resin composition comprising: the polyalkylene carbonate-based resin according to any one of (1) to (6) above; and an antioxidant.

(8) The present invention provides the polyalkylene carbonate-based resin composition according to (7) above, wherein the antioxidant is at least one selected from the group consisting of tetrakis[methylene-3-(3,5-di-t-butyl-4-hydroxyphenyl)propionate]methane, triethylene glycol-bis-3-(3-t-butyl-4-hydroxy-5-methylphenyl)propionate, thiodiethylenebis[3-(3,5-di-t-butyl-4-hydroxyphenyl)propionate], 1,2-bis(3,5-di-t-butyl-4-hydroxyhydrocinnamoyl)hydrazine, octadecyl 3-(3,5-di-t-butyl-4-hydroxyphenyl)propionate, 1,3,5-tris(4-t-butyl-3-hydroxy-2,6-dimethylbenzyl)-1,3,5-triazine-2,4,6-(1H,3H,5H)-trione, 2,4-di-t-pentyl-6-(1-(3,5-di-t-pentyl-2-hydroxyphenyl)ethyl)phenyl acrylate, 1,3,5-trimethyl-2,4,6-tris(3,5-di-t-butyl-4-hydroxybenzyl)benzene, $\alpha$-tocopherol and 2,6-di-t-butyl-p-cresol.

(9) The present invention provides the polyalkylene carbonate-based resin composition according to (7) or (8) above, wherein the antioxidant is included in an amount of 0.01 to 3.00 parts by weight based on 100 parts by weight of the polyalkylene carbonate-based resin.

(10) The present invention provides a method for producing a polyalkylene carbonate-based resin, including a step of polymerizing an alkylene oxide compound, carbon dioxide, and maleic anhydride in a solvent in the presence of a catalyst.

(11) The present invention provides the method for producing a polyalkylene carbonate-based resin according to (10) above, wherein the maleic anhydride is used in an amount of 0.1 to 25 parts by weight relative to 100 parts by weight of the alkylene oxide compound.

(12) The present invention provides the method for producing a polyalkylene carbonate-based resin according to (10) or (11) above, wherein the polymerization is performed at a temperature of 30°C to 120°C within 24 hours.

(13) The present invention provides the method for producing a polyalkylene carbonate-based resin according to any one of (10) to (12) above, wherein the catalyst comprises a double metal cyanide compound and a complexing agent.

(14) The present invention provides the method for producing a polyalkylene carbonate-based resin according to any one of (10) to (13) above, wherein the double metal cyanide compound comprises a metal cyanide complex salt-derived component and a metal salt-derived component, wherein the metal cyanide complex salt is represented by Chemical Formula 3 below, and the metal salt is represented by Chemical Formula 4 below:

[Chemical Formula 3] $Y_aM'(CN)_b$

wherein:

- M' is at least one selected from the group consisting of Fe(II), Fe(III), Co(II), Co(III), Cr(II), Cr(III), Mn(II), Mn(III), Ir(III), Ni(II), Rh(III), Ru(II), V(V), and V(IV),
- Y is an alkali metal ion or an alkaline earth metal ion,
- a is an integer from 1 to 4, b is an integer from 4 to 6, and the values of a and b are selected such that the metal cyanide complex salt is electrically neutral,

[Formula 4] $M(X)_n$

wherein:

- M is at least one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II), and Cr(III),
- X is any one anion selected from the group consisting of halides, hydroxides, sulfates, carbonates, cyanates, oxalates, thiocyanates, isocyanates, isothiocyanates, carboxylates, and nitrates,
- n is a number satisfying the valence state of M.

(15) The present invention provides the method for producing a polyalkylene carbonate-based resin according to any one of (10) to (14) above, wherein the metal cyanide complex salt is potassium hexacyanocobaltate(III), potassium

hexacyanoferrate(II), potassium hexacyanoferrate(III), calcium hexacyanocobaltate(III), or lithium hexacyanoiridate(III).

(16) The present invention provides the method for producing a polyalkylene carbonate-based resin according to any one of (10) to (15) above, wherein the metal salt is at least one selected from the group consisting of zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate, and nickel(II) nitrate.

(17) The present invention provides the method for producing a polyalkylene carbonate-based resin according to any one of (10) to (16) above, wherein the complexing agent is at least one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-Propyl-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-methyl cycloheptanol, and 4-methyl cycloheptanol.

## [Advantageous Effects]

The polyalkylene carbonate-based resin according to the present invention is produced by polymerizing alkylene oxide and carbon dioxide together with maleic anhydride, and thus includes a maleic anhydride-derived unit in the polymer chain, so that the glass transition temperature increases and the thermal decomposition temperature increases, thereby improving the thermal stability.

## [Description of Drawings]

The following drawings attached to this specification illustrate specific embodiments of the present invention, and serve to further understand the technical idea of the present invention together with the contents of the invention described above, so the present invention should not be interpreted as being limited to the matters described in such drawings.

FIG. 1 shows a result of NMR analysis of polyethylene carbonate-based resins produced in the examples and comparative examples.

FIGS. 2 and 3 are graphs of the results of mass change analysis using a thermogravimetric analyzer of polyethylene carbonate-based resins produced in the examples and comparative examples.

## [Best Modes of the Invention]

Hereinafter, the present invention will be described in more detail to help understand the present invention.

The terms or words used in the description and claims of the present invention should not be construed as being limited to their ordinary or dictionary meanings, but should be interpreted as meanings and concepts consistent with the technical spirit of the present invention, based on the principle that the inventor may adequately define the concepts of terms to best describe his/her invention.

### Definition of Terms

In this specification, the term 'thermal decomposition temperature ($Td_{50}$)' refers to a temperature at a time point at which a polyalkylene carbonate-based resin is decomposed by heat and has a mass reduced to 50% of the mass before the heat is applied.

In this specification, the term "alkyl group" may refer to a monovalent aliphatic saturated hydrocarbon.

In this specification, the term "aryl group" may refer to a cyclic aromatic hydrocarbon, and may also be meant to include both a monocyclic aromatic hydrocarbon in which one ring is formed and a polycyclic aromatic hydrocarbon in which two or more rings are bonded.

In this specification, the term "alkenyl group" may refer to a monovalent aliphatic unsaturated hydrocarbon containing one or two or more double bonds.

In this specification, the term "cycloalkyl group" may be meant to include both cyclic saturated hydrocarbons and

cyclic unsaturated hydrocarbons containing one or two or more unsaturated bonds.

Measurement Method

In this specification, the thermal decomposition temperature ($Td_{50}$) was measured using a TGA (thermogravimetric analyzer), and specifically, a temperature at a time point at which the mass decreased by 50% while increasing the temperature (10°C/min) from 30°C to 400°C was measured using the TGA (TGA2, Mettler Toledo).

In this specification, a mass change rate was measured using a TGA, similar to the thermal decomposition temperature, and the mass change rate when stored for 60 minutes under an isothermal condition of 240°C was confirmed.

In this specification, a glass transition temperature was measured using a DSC (differential scanning calorimeter), and specifically, was measured in a nitrogen atmosphere while heating the sample from -40°C to 250°C (10°C/min) using the DSC (Q20, TA instrument). The Tg (glass transition temperature) was confirmed based on the endothermic curve results.

In this specification, the melt index was measured using a melt flow indexer (MFI), and was measured under the conditions of 190°C and 6.835 kg according to ASTM D1238, and the discharge amount was calculated as g/10min. More specifically, an evaluation material was placed in a piston heated to the above temperature using a MFI (QM280A, QMESYS), and the piston was placed in position to apply the above weight load. After 4 minutes, the discharge amount was cut off, and the discharge amount was cut off again 4 times every 30 seconds, and the average value was confirmed.

Polyalkylene Carbonate-based Resin

The present invention provides a polyalkylene carbonate-based resin having improved thermal stability by suppressing thermal decomposition.

The polyalkylene carbonate-based resin according to one embodiment of the present invention is characterized by comprising: a repeating unit represented by Chemical Formula 1 below; a repeating unit represented by Chemical Formula 2 below; and a maleic anhydride-derived unit, wherein the polyalkylene carbonate-based resin has a peak in the region of 6.3 ppm to 6.7 ppm in a $^1H$ NMR spectrum:

[Chemical Formula 1]

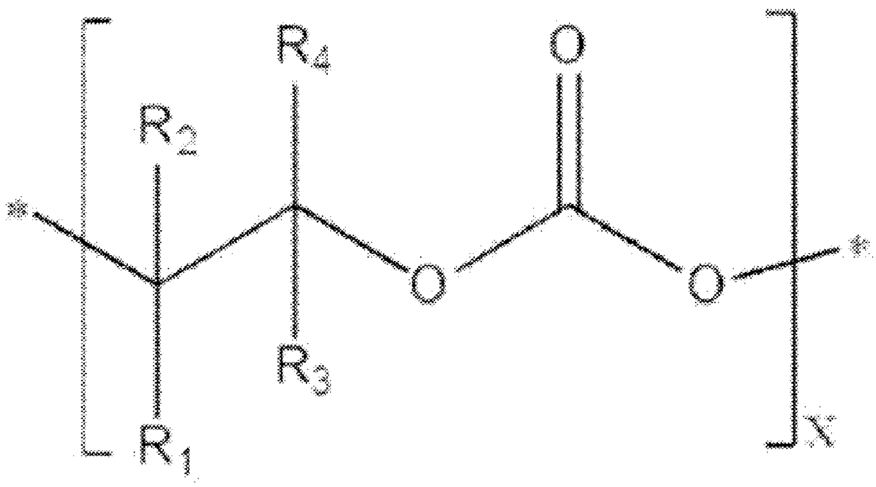

[Chemical Formula 2]

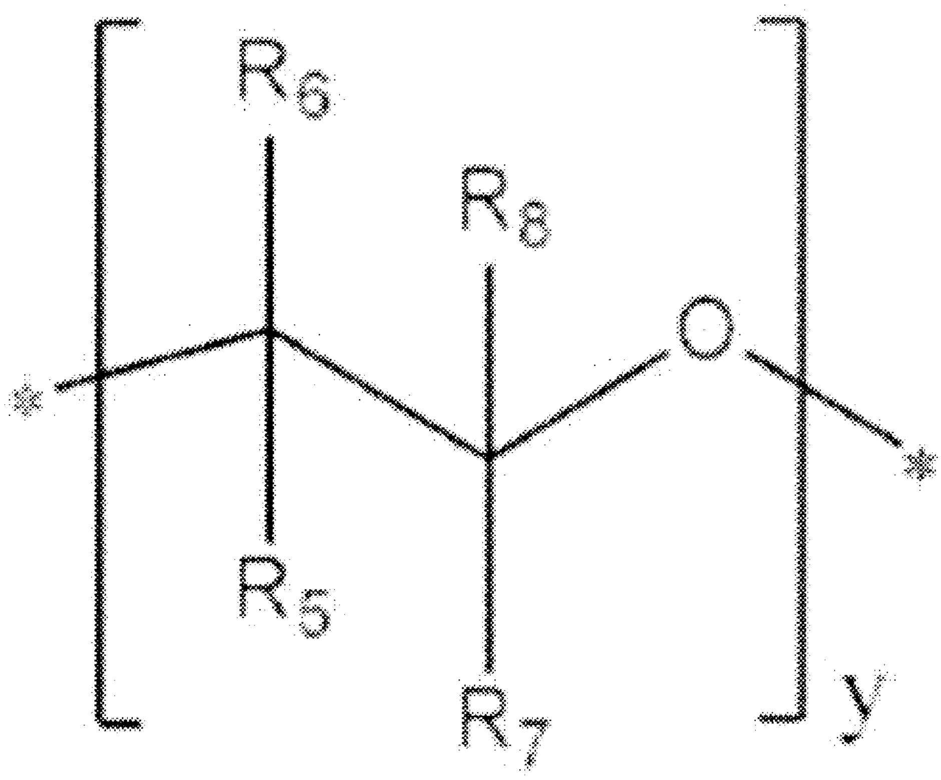

wherein:

$R_1$ to $R_8$ are each independently hydrogen, a linear alkyl group having 1 to 20 carbon atoms, a branched alkyl group having 3 to 20 carbon atoms, an aryl group having 6 to 20 carbon atoms, an alkenyl group having 2 to 20 carbon atoms, or a cycloalkyl group having 3 to 20 carbon atoms,
* denotes a linking site between repeating units, and
x and y are mole fractions, wherein x is 0.70 to 1.00, y is 0.00 to 0.30, and x+y is 1.

Meanwhile, when Chemical Formula 1 or 2 above is an initiation site terminal of the polymer chain constituting the polyalkylene carbonate-based resin, the terminal may have a methyl group ($-CH_3$) as a terminal group, and when Chemical Formula 1 or 2 above is a termination site terminal of the polymer chain, the terminal may have a hydroxyl group (-OH) as a terminal group.

Polyalkylene carbonate resin is produced using carbon dioxide as a raw material and is receiving much attention as a biodegradable resin, but due to its low thermal stability, it undergoes thermal decomposition at a temperature of 180°C or more, which greatly limits its industrial application. Therefore, a method of improving the thermal stability by mixing or mixing and then extruding an acid anhydride as a terminal capping agent into the polyalkylene carbonate resin has been studied, but the effect of improving the thermal stability was insignificant.

However, a polyalkylene carbonate-based resin according to one embodiment of the present invention is produced by reacting maleic anhydride with a monomer component during polymerization thereof, wherein the maleic anhydride can improve thermal stability by being introduced into the polymer chain structure to suppress thermal decomposition. The thermal decomposition behavior of polyalkylene carbonate appears as a phenomenon in which as hydrogen contained in the hydroxyl group of the resin terminal is released under high temperature conditions, the resin terminal is activated, and the activated resin terminal attacks the carbonate group in the nearby polymer chain to cause a back-biting reaction and random chain scission in which the polymer chain length is reduced while continuously forming a single molecule such as an alkylene carbonate, whereby the carbonate group portion within the polymer chain is broken and divided into chains including terminals such as carbon dioxide, hydroxyl groups, and double bonds, thereby shortening the polymer chain length in a chain-like manner. However, in the case of a terminal-capped polyalkylene

carbonate resin, it is difficult to prevent thermal decomposition of short polymer chains generated in a chain-like manner, whereas in the case of introducing maleic anhydride into the polymer chain structure as in the present invention, the maleic anhydride-derived unit within the polymer chain structure forms a polymer network cross-linked with terminally activated polymer chains, thereby improving the thermal stability of the polymer chain structure.

In the present invention, the polyalkylene carbonate-based resin is a polymer produced by polymerizing an alkylene oxide compound, carbon dioxide, and an organic acid anhydride, and may comprise a repeating unit represented by Chemical Formula 1 below, a repeating unit represented by Chemical Formula 2 below, and a maleic anhydride-derived unit:

[Chemical Formula 1]

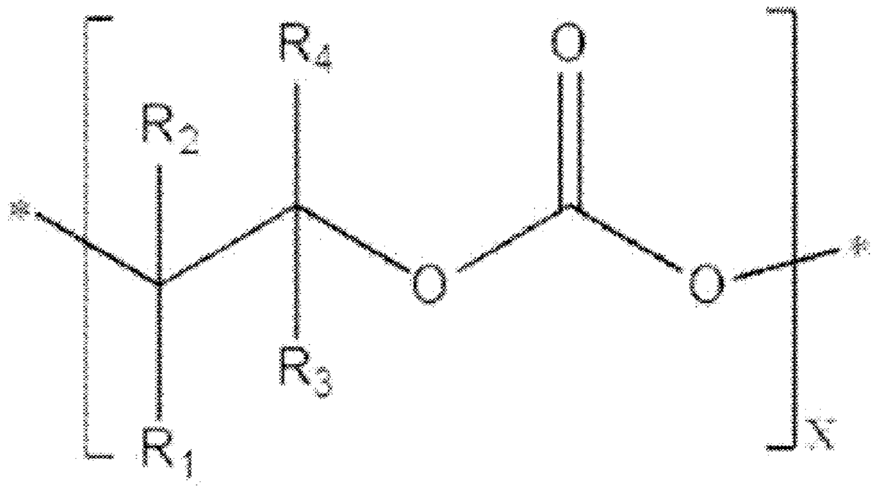

[Chemical Formula 2]

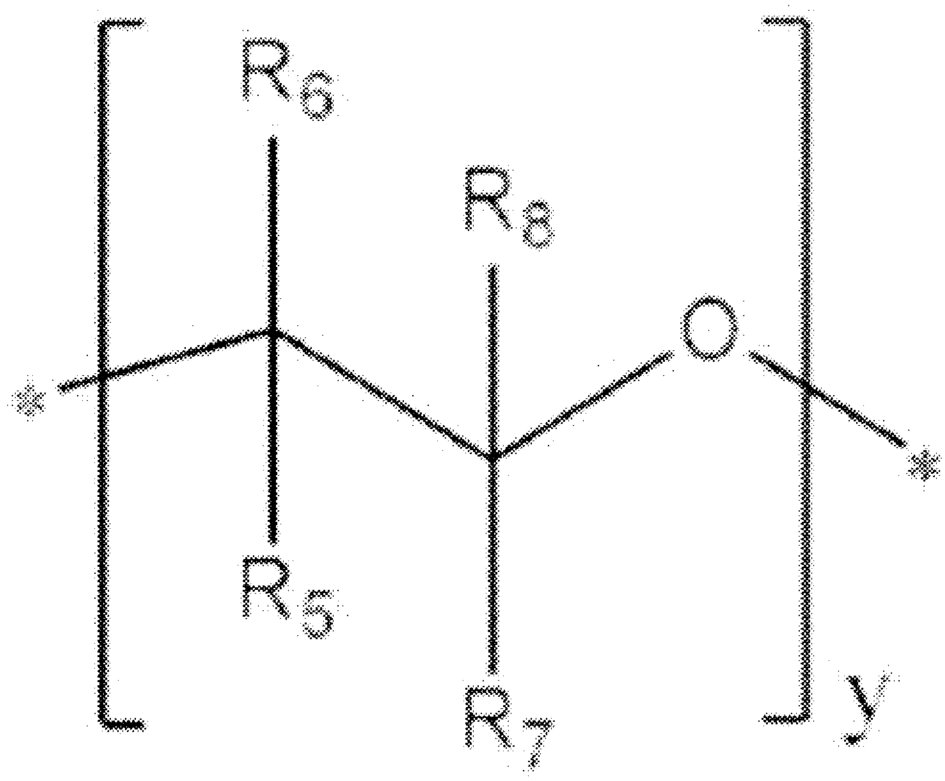

wherein:
$R_1$ to $R_8$ are each independently hydrogen, a linear alkyl group having 1 to 20 carbon atoms, a branched alkyl group having 3 to 20 carbon atoms, an aryl group having 6 to 20 carbon atoms, an alkenyl group having 2 to 20 carbon atoms, or a cycloalkyl group having 3 to 20 carbon atoms, * denotes a linking site between repeating units, and x and y are mole fractions, wherein x is 0.70 to 1.00, y is 0.00 to 0.30, and x+y is 1.

In addition, the x may be 0.80 to 1.00, and y may be 0.00 to 0.20. Preferably, the x may be 0.90 to 1.00, and y may be 0.00 to 0.10. When the above-described range is satisfied, the fixed ratio of carbon dioxide is high, which is effective in reducing greenhouse gases and is advantageous in biodegradation characteristics. In addition, when the polyalkylene carbonate-based resin according to the present invention is manufactured into a film, the film exhibits low oxygen permeability, thereby having an excellent effect of barrier characteristics.

In addition, $R_1$ to $R_8$ in Chemical Formula 1 above are each independently hydrogen, a linear alkyl group having 1 to 20 carbon atoms, a branched alkyl group having 3 to 20 carbon atoms, an aryl group having 6 to 20 carbon atoms, an alkenyl group having 2 to 20 carbon atoms, or a cycloalkyl group having 3 to 20 carbon atoms, and an appropriate functional group may be selected in consideration of the properties of the resin to be finally obtained.

In addition, the repeating unit represented by Chemical Formula 1 above may be represented by Chemical Formula 5 below:

[Formula 5]

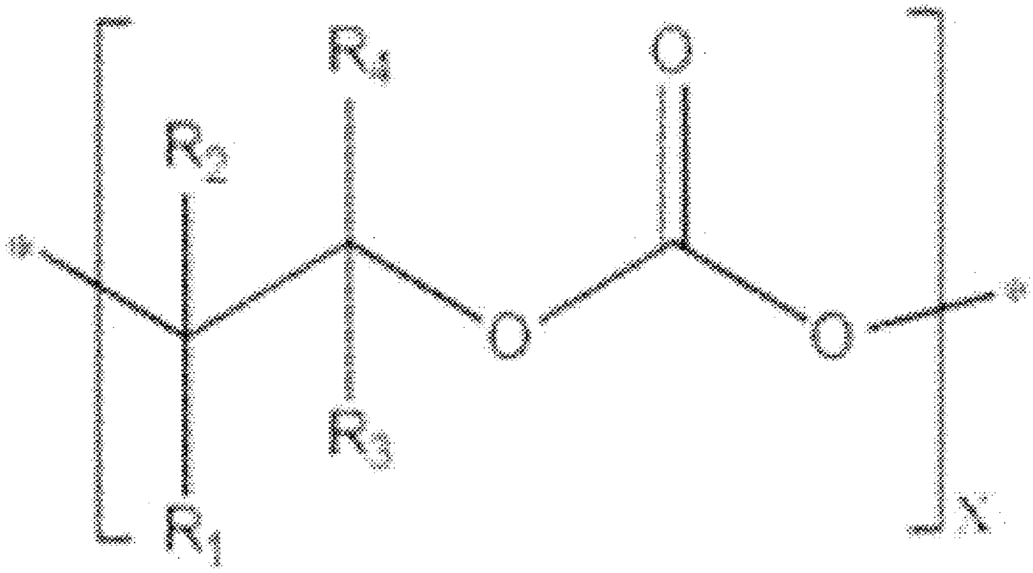

In Chemical Formula 5 above, $R_1$ to $R_4$ are each independently hydrogen or a linear alkyl group having 1 to 10 carbon atoms, and x and * are as defined in Chemical Formula 1 above.

More specifically, the repeating unit represented by Chemical Formula 1 above may be represented by Chemical Formula 6 or 7 below:

[Chemical Formula 6]

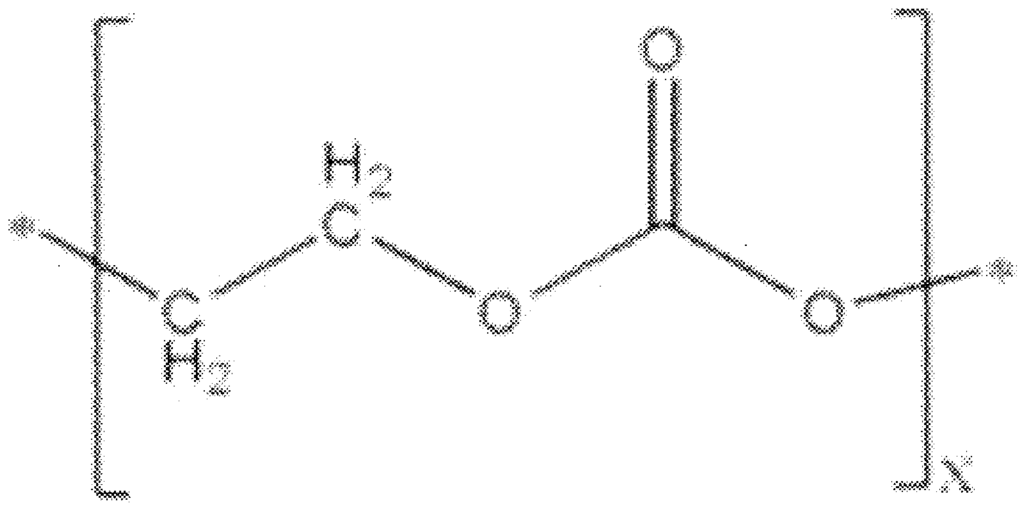

[Chemical Formula 7]

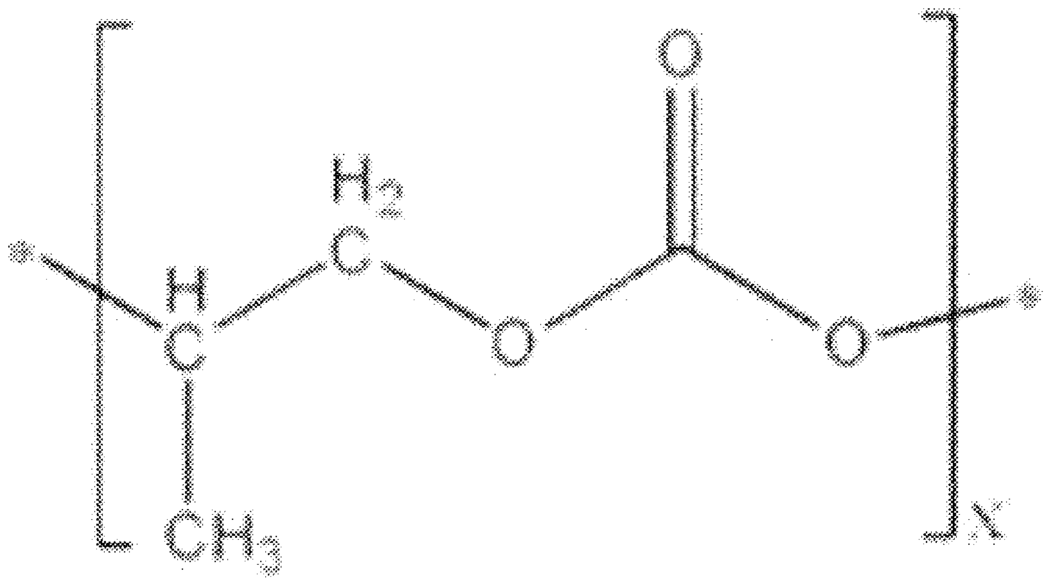

In Chemical Formulas 6 and 7 above, x and * are as defined in Chemical Formula 1 above.

In addition, the repeating unit represented by Chemical Formula 2 above may be represented by Chemical Formula 8 below:

[Chemical Formula 8]

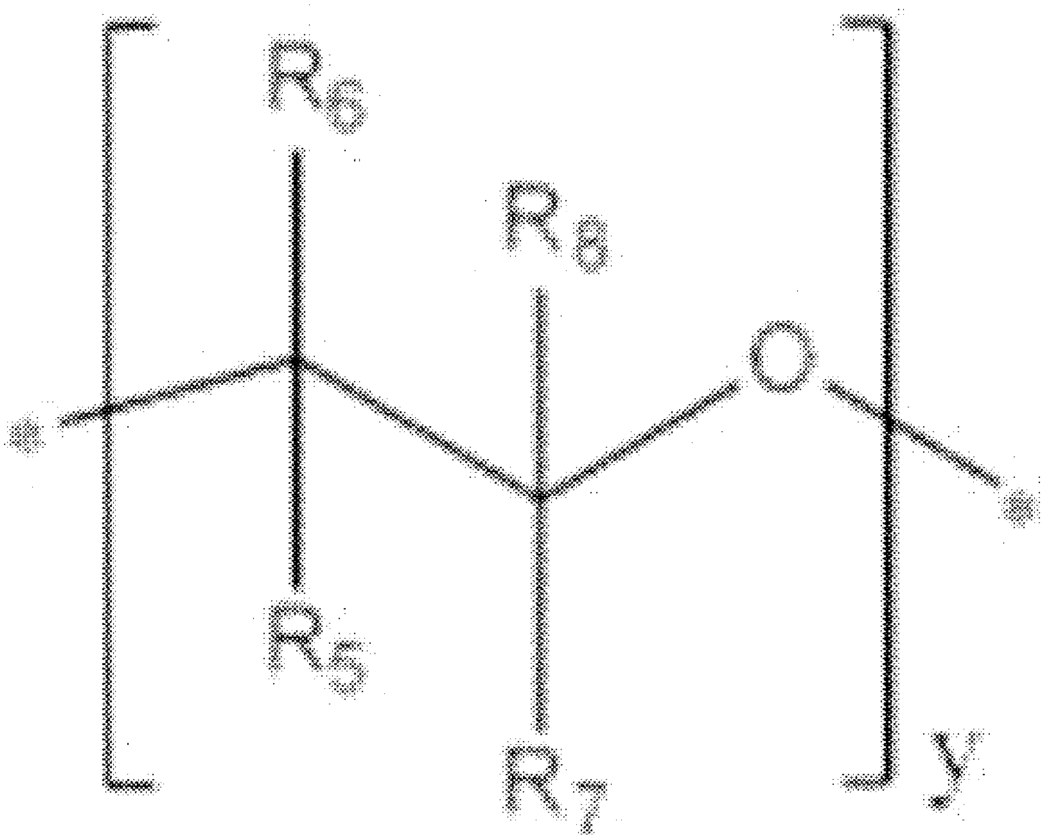

In Chemical Formula 8 above, $R_5$ to $R_8$ are each independently hydrogen or a linear alkyl group having 1 to 10 carbon atoms, and y and * are as defined in Chemical Formula 2 above.

More specifically, the repeating unit represented by Chemical Formula 2 above may be represented by Chemical Formula 9 or 10 below:

[Chemical Formula 9]

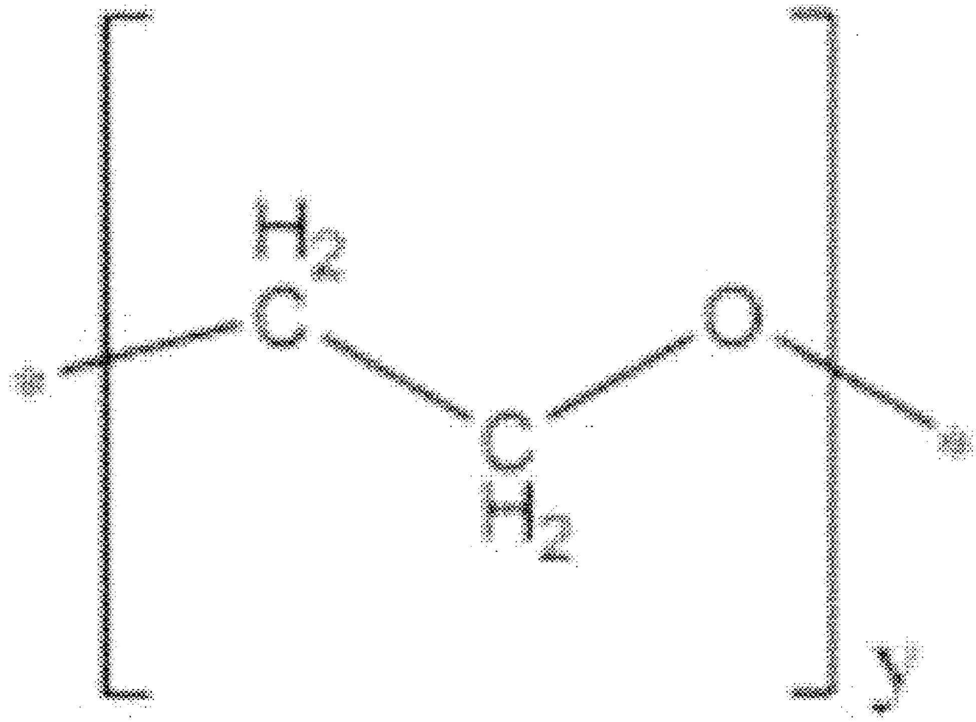

[Chemical Formula 10]

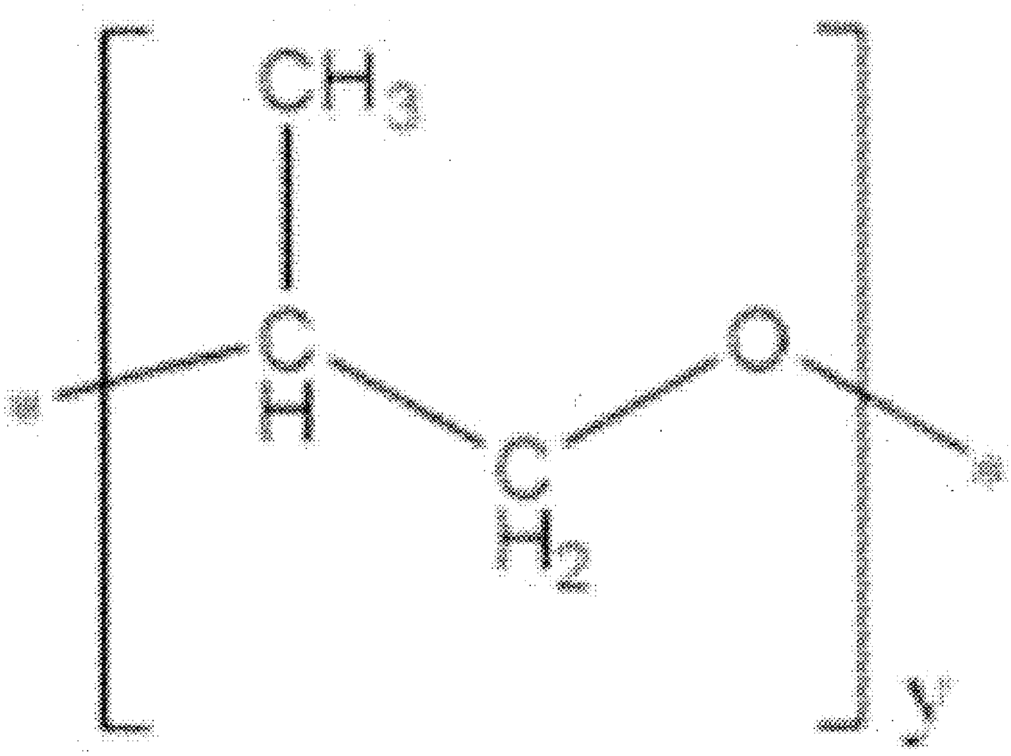

In Chemical Formulas 9 and 10 above, y and * are as defined in Chemical Formula 4 above.

In addition, the maleic anhydride-derived unit is a component derived from maleic anhydride and bonded to the polymer chain of the polyalkylene carbonate-based resin, and may be maleic anhydride itself or a structure, functional group, or component derived from the maleic anhydride.

In addition, the polyalkylene carbonate-based resin according to one embodiment of the present invention has a peak in the region of 6.3 ppm to 6.7 ppm in the $^1H$ NMR spectrum, and the presence of the peak in the region means that a maleic anhydride-derived unit exists in the polymer chain structure. More specifically, the peak in the region can be confirmed only when a maleic anhydride-derived unit exists in the polymer chain structure, and when a polymer formed by the completion of the polymerization reaction is mixed with maleic anhydride, or when the maleic anhydride is used as a terminal capping agent, the peak may not exist.

Here, the $^1H$ NMR spectrum may be measured by dissolving 10 mg of a polyalkylene carbonate-based resin sample in a chloroform-d6 solvent using a $^1H$-NMR spectrometer (500 MHz Spectrometer, Jeol).

In addition, the polyalkylene carbonate-based resin according to one embodiment of the present invention may have a melt index of 1 g/10 min or more and 25 g/10 min or less, more preferably 1 g/10 min to 10 g/10 min as measured under the conditions of 190°C and 6.835 kg according to ASTM D1238.

In addition, the polyalkylene carbonate-based resin according to one embodiment of the present invention may have a mass change rate of 80 wt% or less, preferably 10 wt% to 80 wt%, and particularly preferably 15 wt% to 50 wt% when stored at 240°C for 60 minutes.

In addition, the polyalkylene carbonate-based resin according to one embodiment of the present invention may have a glass transition temperature of -10°C or more and 50°C or less, preferably 5°C or more and 50°C or less.

In addition, the polyalkylene carbonate-based resin according to one embodiment of the present invention may have a thermal decomposition temperature (Td50) of 290°C or more, preferably 290°C or more and 400°C or less.

The polyalkylene carbonate-based resin according to one embodiment of the present invention includes Chemical Formula 1, Chemical Formula 2, and the maleic anhydride-derived unit as described above, and thus can have the melt index, mass change rate, glass transition temperature, and thermal decomposition temperature as described above, thereby having excellent thermal stability and processability.

In addition, the polyalkylene carbonate-based resin according to one embodiment of the present invention may include the maleic anhydride-derived unit in an amount of 0.1 part by weight or more and 50 parts by weight or less, specifically 0.5 parts by weight to 45 parts by weight, based on 100 parts by weight of the polyalkylene carbonate-based resin. When the maleic anhydride-derived unit is within the above-described range, the polyalkylene carbonate-based resin can have a lower melt index and better thermal stability.

In addition, the polyalkylene carbonate-based resin of the present invention may have a content of cyclic carbonate of 0.5 wt% to 15.0 wt%, 0.5 wt% to 10.0 wt%, or 0.5 wt% to 5.0 wt% based on the total weight. When the above-described range is satisfied, a problem in which a glass transition temperature is lowered due to cyclic carbonate acting as a softening agent can be minimized, thereby having excellent mechanical properties.

The cyclic carbonate content may be measured by dissolving 10 mg of a polyalkylene carbonate-based resin sample in a chloroform-d6 solvent using a $^1H$-NMR spectrometer (500 MHz Spectrometer, Jeol). Specifically, by confirming that a peak appears around 4.5 ppm, which is a cyclic carbonate peak, from the results measured by the $^1H$-NMR spectrometer, the cyclic carbonate content may be calculated using carbonate peak area and ether peak area values as in Mathematical Formula 1 below:

[Mathematical Equation 1]

$$\frac{(A/N)}{(A/N)+[(B-C)/(1-CO_2\ content)]}$$

wherein A, B, C, N, and $CO_2$ content may be defined as follows:
A = cyclic carbonate peak area, B = carbonate peak area, C = ether peak area, N = [alkylene oxide molar mass / (44 + alkylene oxide molar mass)], $CO_2$ content = (carbonate unit molar fraction X 44) / [(carbonate unit molar fraction X 44) + (alkylene oxide molar mass X 100)]

## Polyalkylene Carbonate-based Resin Composition

The present invention provides a polyalkylene carbonate-based resin composition comprising the above-described polyalkylene carbonate-based resin.

More specifically, the present invention provides a polyalkylene carbonate-based resin composition comprising the above-described polyalkylene carbonate-based resin; and an antioxidant.

The antioxidant is for removing radicals that may remain in the polyalkylene carbonate-based resin, and more specifically, the antioxidant may be at least one selected from the group consisting of tetrakis[methylene-3-(3,5-di-t-butyl-4-hydroxyphenyl)propionate]methane, triethylene glycol-bis-3-(3-t-butyl-4-hydroxy-5-methylphenyl)propionate, thiodiethylenebis[3-(3,5-di-t-butyl-4-hydroxyphenyl)propionate], 1,2-bis(3,5-di-t-butyl-4-hydroxyhydrocinnamoyl)hydrazine, octadecyl 3-(3,5-di-t-butyl-4-hydroxyphenyl)propionate, 1,3,5-tris(4-t-butyl-3-hydroxy-2,6-dimethylbenzyl)-1,3,5-triazine-2,4,6-(1H,3H,5H)-trione, 2,4-di-t-pentyl-6-(1-(3,5-di-t-pentyl-2-hydroxyphenyl)ethyl)phenyl acrylate, 1,3,5-trimethyl-2,4,6-tris(3,5-di-t-butyl-4-hydroxybenzyl)benzene, $\alpha$-tocopherol and 2,6-di-t-butyl-p-cresol.

The antioxidant may be included in an amount of 0.01 to 3.00 parts by weight based on 100 parts by weight of the polyalkylene carbonate-based resin, and preferably, may be included in an amount of 0.05 to 1.50 parts by weight. When the antioxidant is included within the above-described range, the thermal stability of the polyalkylene carbonate-based resin can be effectively improved.

Method for Producing Polyalkylene Carbonate-based Resin

The present invention provides a method for producing the above polyalkylene carbonate-based resin.

The method for producing a polyalkylene carbonate-based resin according to one embodiment of the present invention includes a step of polymerizing an alkylene oxide compound, carbon dioxide, and maleic anhydride in a solvent in the presence of a catalyst.

By the above polymerization, a polymer comprising a polyalkylene carbonate-based resin in which a maleic anhydride-derived unit is introduced into the polymer chain can be obtained, and the maleic anhydride may be included in an amount of 0.1 to 40 parts by weight relative to 100 parts by weight of the alkylene oxide compound. More specifically, the maleic anhydride may be included in an amount of 0.5 to 35 parts by weight relative to 100 parts by weight of the alkylene oxide compound. In this case, the maleic anhydride-derived unit is included in an amount of 1 to 50 parts by weight relative to 100 parts by weight of the finally produced polyalkylene carbonate-based resin, so that the thermal stability of the resin can be further improved.

In addition, the antioxidant described above may be added to the polymer produced above, and the added antioxidant can increase the glass transition temperature and thermal decomposition temperature of the polyalkylene carbonate-based resin, thereby improving the thermal stability and processability. The antioxidant may be included in an amount of 0.01 to 3.00 parts by weight based on 100 parts by weight of the polyalkylene carbonate-based resin.

The catalyst includes a double metal cyanide compound and a complexing agent, and as the double metal cyanide compound and the complexing agent, any one conventional in the art may be used without limitation.

For example, the double metal cyanide compound may comprise a metal cyanide complex salt-derived component and a metal salt-derived component, wherein the metal cyanide complex salt may be represented by Chemical Formula 3 below, and the metal salt may be represented by Chemical Formula 4 below:

[Chemical Formula 3] $= Y_aM'(CN)_b$

wherein M' is at least one selected from the group consisting of Fe(II), Fe(III), Co(II), Co(III), Cr(II), Cr(III), Mn(II), Mn(III), Ir(III), Ni(II), Rh(III), Ru(II), V(V), and V(IV), Y is an alkali metal ion or an alkaline earth metal ion, a is an integer from 1 to 4, b is an integer from 4 to 6, and the values of a and b are selected such that the metal cyanide complex salt is electrically neutral,

[Formula 4] $M(X)_n$

wherein:

M is at least one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II), and Cr(III), X is any one anion selected from the group consisting of halides, hydroxides, sulfates, carbonates, cyanates, oxalates, thiocyanates, isocyanates, isothiocyanates, carboxylates, and nitrates, and n is a number satisfying the valence state of M.

As another example, the metal cyanide complex salt may be potassium hexacyanocobaltate(III), potassium hexacyanoferrate(II), potassium hexacyanoferrate(III), calcium hexacyanocobaltate(III), or lithium hexacyanoiridate(III), preferably potassium hexacyanocobaltate(III).

The metal salt may exhibit water solubility. Specifically, the metal salt may be represented by Chemical Formula 11 below:

[Chemical Formula 11] $M(X)_n$

wherein M is a transition metal, and may be at least one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II), and Cr(III), and more preferably at least one selected from the group consisting of Zn(II), Fe(II), Co(II), and Ni(II). X is an anion selected from a halide, a hydroxide, a sulfate, a carbonate, a cyanate, an oxalate, a thiocyanate, an isocyanate, an isothiocyanate, a carboxylate, and a nitrate. The value of n is a number satisfying the valence state of M.

As another example, the metal salt may be at least one selected from the group consisting of zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate, nickel(II) nitrate, and mixtures thereof, and preferably may be zinc(II) chloride, zinc(III) chloride, zinc bromide, or zinc iodide.

The catalyst according to the present invention may be represented by Chemical Formula 12 below:

[Chemical Formula 12] $M^2_p[M^1(CN)_6]_q \cdot dM^2(X)_r \cdot eL \cdot fH_2O$

wherein $M^1$ and $M^2$ are each independently a transition metal, X is an anion, and L is cyclobutanol, cyclopentanol, cyclohexanol, cycloheptanol, or cyclooctanol. p, q, d, r, e, and f are each independently an integer from 1 to 6.

More specifically, the catalyst according to the present invention may be represented by Chemical Formula 13 below:

[Chemical Formula 13] $Zn_3[Co(CN)_6]_2 \cdot gZnCl_2 \cdot hL \cdot iH_2O$

wherein L is cyclobutanol, cyclopentanol, cyclohexanol, cycloheptanol, or cyclooctanol, and g, h, and i are each independently an integer from 1 to 6.

In addition, the complexing agent may be any one generally used in the art without particular limitation, but may be at least one selected from the group consisting of ethanol, isopropanol, normal butanol, isobutanol, sec-butanol, and tert-butanol.

As another example, the complexing agent may be a compound represented by Chemical Formula 14 below:

[Chemical Formula 14]

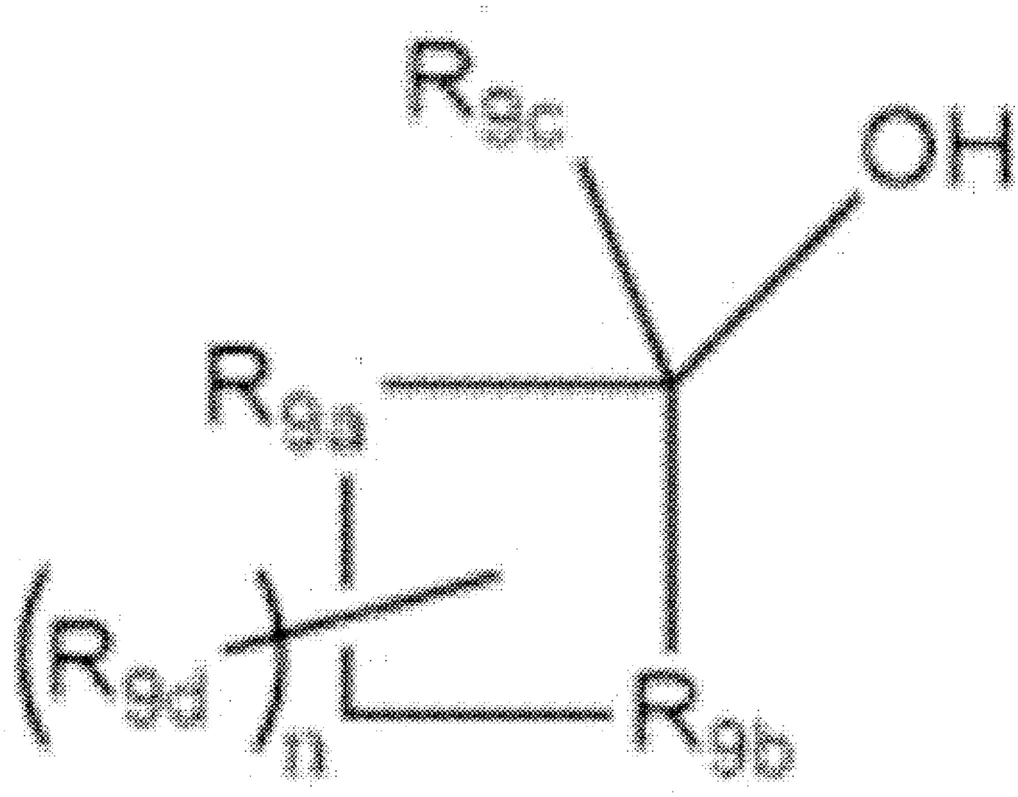

wherein $R_{9a}$ and $R_{9b}$ are each independently a single bond or an alkylene group having 1 to 5 carbon atoms, provided that at least one of $R_{9a}$ and $R_{9b}$ is an alkylene group having 1 to 5 carbon atoms, $R_{9c}$ and $R_{9d}$ are each independently a hydrogen atom or an alkyl group having 1 to 6 carbon atoms, and n is an integer from 0 to 2.

Specifically, in Chemical Formula 14 above, $R_{9a}$ and $R_{9b}$ may be each independently a single bond or an alkylene group having 1 to 3 carbon atoms, provided that at least one of $R_{9a}$ and $R_{9b}$ is an alkylene group having 1 to 3 carbon atoms, $R_{9c}$ and $R_{9d}$ may be each independently a hydrogen atom or an alkyl group having 1 to 4 carbon atoms, and n may be an integer from 0 to 2.

As another example, in Chemical Formula 14 above, $R_{9a}$ and $R_{9b}$ may be each independently a single bond or an alkylene group having 1 to 3 carbon atoms, provided that at least one of $R_{9a}$ and $R_{9b}$ is an alkylene group having 1 to 3 carbon atoms, $R_{9c}$ may be a hydrogen atom, and n may be 0.

As another example, the complexing agent may be a cycloalkyl alcohol having 3 to 12 carbon atoms, specifically a cycloalkyl alcohol having 4 to 10 carbon atoms, or 5 to 7 carbon atoms.

More specifically, the complexing agent may be at least one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-Propyl-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-methyl cycloheptanol, and 4-methyl cycloheptanol. Specifically, the complexing agent may be any one or more selected from the group consisting of cyclobutanol, cyclopentanol, cyclohexanol, cycloheptanol, and cyclooctanol.

As another example, the complexing agent may be any one or more selected from the group consisting of

cyclobutanol, cyclopentanol, cyclohexanol, cycloheptanol, and cyclooctanol.

Meanwhile, when the catalyst contains a compound represented by Chemical Formula 14 as a complexing agent, the crystal structure of the catalyst may be configured in various forms, such as cubic, amorphous, and monoclinic, by using a cycloalkane alcohol having a bulky structure as a complexing agent, whereby the rate of the reaction between the epoxide compound and carbon dioxide is appropriately controlled to increase the proportion of repeating units containing carbon dioxide in the produced polyalkylene carbonate, and the content of cyclic carbonate as a by-product is reduced, so that a polyalkylene carbonate having superior thermal stability and processability can be obtained.

In addition, the catalyst may further include an auxiliary complexing agent as needed, wherein the auxiliary complexing agent may be a compound having a hydroxyl group, an amine group, an ester group, or an ether group at the terminal.

The auxiliary complexing agent can improve the activity of the catalyst, and for example, may be at least one selected from the group consisting of polyacrylamide, poly(acrylamide-co-acrylic acid), polyacrylic acid, poly(acrylic acid-co-maleic acid), polyacrylonitrile, polyalkyl acrylate, polyalkyl methacrylate, polyvinyl methyl ether, polyvinyl ethyl ether, polyvinyl acetate, polyvinyl alcohol, poly-N-vinylpyrrolidone, poly(N-vinylpyrrolidone-co-acrylic acid), polyvinyl methyl ketone, poly(4-vinylphenol), poly(acrylic acid-co-styrene), oxazoline polymer, polyalkyleneimine, maleic acid, maleic anhydride copolymer, hydroxyethyl cellulose, polyacetal, glycidyl ether, glycoside, carboxylic acid ester of polyhydric alcohol, gallic acid, ester and amide.

In addition, the auxiliary complexing agent may be a compound produced by ring-opening polymerization of a cyclic ether compound, an epoxy polymer or an oxetane polymer, and for example, may be at least one selected from the group consisting of polyether, polyester, polycarbonate, polyalkylene glycol, polyalkylene glycol sorbitan ester, and polyalkylene glycol glycidyl ether.

In addition, the polymerization is not particularly limited, but may preferably be carried out by solution polymerization. The solution polymerization can appropriately control the heat of reaction and easily control the weight average molecular weight or viscosity of the polyalkylene carbonate to be obtained.

The catalyst and the alkylene oxide compound may be used in a weight ratio of 1:100 to 1:8000, 1:300 to 1:6000, or 1:1000 to 1:4000. Within the above range, there is an effect of minimizing by-products while exhibiting high catalytic activity and minimizing the back-biting phenomenon of polyalkylene carbonate produced by heating.

In addition, the polymerization may be carried out in a temperature range of 30°C to 120°C, 40°C to 110°C, or 50°C to 100°C. When the above range is satisfied, the polymerization time of the alkylene oxide compound and carbon dioxide can be managed within 24 hours, thereby improving manufacturing productivity.

In addition, the polymerization may be carried out in a pressure range of 5 bar to 50 bar, 10 bar to 40 bar, or 15 bar to 30 bar. When the above range is satisfied, there is an effect of increasing the ratio of repeating units containing carbon dioxide in the produced polyalkylene carbonate and reducing the content of cyclic carbonate as a by-product.

The alkylene oxide compound may be at least one compound selected from the group consisting of alkylene oxide having 2 to 20 carbon atoms, unsubstituted or substituted with a halogen or an alkyl group having 1 to 5 carbon atoms; cycloalkylene oxide having 4 to 20 carbon atoms, unsubstituted or substituted with a halogen or an alkyl group having 1 to 5 carbon atoms; and styrene oxide having 8 to 20 carbon atoms, unsubstituted or substituted with a halogen or an alkyl group having 1 to 5 carbon atoms, and for example, may be at least one compound selected from the group consisting of ethylene oxide, propylene oxide, butene oxide, pentene oxide, hexene oxide, octene oxide, decene oxide, dodecene oxide, tetradecene oxide, hexadecene oxide, octadecene oxide, butadiene monooxide, 1,2-epoxy-7-octene, epifluorohydrin, epichlorohydrin, epibromohydrin, isopropyl glycidyl ether, butyl glycidyl ether, t-butyl glycidyl ether, 2-ethylhexyl glycidyl ether, allyl glycidyl ether, cyclopentene oxide, cyclohexene oxide, cyclooctene oxide, cyclododecene oxide, alpha-pinene oxide, 2,3-epoxynorbornene, limonene oxide, dieldrin, 2,3-epoxypropylbenzene, styrene oxide, phenylpropylene oxide, stilbene oxide, chlorostilbene oxide, dichlorostilbene oxide, 1,2-epoxy-3-phenoxypropane, benzyloxymethyl oxirane, glycidyl-methylphenyl ether, chlorophenyl-2,3-epoxypropyl ether, epoxypropyl methoxyphenyl ether, biphenyl glycidyl ether and glycidyl naphthyl ether.

In addition, when the alkylene oxide compound and carbon dioxide are solution polymerized, the alkylene oxide compound and the solvent may be mixed, wherein the solvent may be at least one selected from the group consisting of methylene chloride, ethylene dichloride, trichloroethane, tetrachloroethane, chloroform, acetonitrile, propionitrile, dimethylformamide, N-methyl-2-pyrrolidone, dimethyl sulfoxide, nitromethane, 1,3-dioxalane (dioxolane), 1,4-dioxane, hexane, toluene, tetrahydrofuran, methyl ethyl ketone, methyl amine ketone, methyl isobutyl ketone, acetone, cyclohexanone, trichloroethylene, methyl acetate, vinyl acetate, ethyl acetate, propyl acetate, butyrolactone, caprolactone, nitropropane, benzene, styrene, xylene, and methyl propasol.

The solvent and the alkylene oxide compound may be used in a weight ratio of 1:0.1 to 1:100, 1:1 to 1:100, or 1:1 to 1:10. Within this range, the solvent can appropriately function as a reaction medium, thereby having the effects of improving the productivity of the polyalkylene carbonate-based resin and minimizing by-products generated during the manufacturing process.

After the above polymerization, a step of removing the solvent may be further performed, wherein the solvent

removal may be performed by a general means in the art without any particular limitation as long as it can achieve the purpose of removing the solvent, and for example, may be performed by applying heat at a temperature of 30°C to 150°C for 30 minutes to 10 hours.

## EXAMPLES

Hereinafter, the present invention will be described in more detail by way of examples. However, the following examples are intended to illustrate the present invention, and the scope of the present invention is not limited thereto.

### Preparation Example

In a first 500-ml beaker, 11.45 g of zinc chloride, 30 ml of distilled water, and 39 g of cyclohexanol were mixed to prepare a first mixed solution. In a second 250-ml beaker, 4 g of potassium hexacyanocobaltate was dissolved in 100 ml of distilled water to prepare a second mixed solution. In a third 100-ml beaker, 5 g of polypropylene glycol (Mw=3,000) and 23 g of cyclohexanol were dissolved in 2 ml of distilled water to prepare a third mixed solution. The second mixed solution was added dropwise to the first mixed solution using a mechanical stirrer at 25°C for 1 hour, and then the third mixed solution was added all at once and reacted for 1 hour. Thereafter, the mixed product was separated using a high-speed centrifuge, and the separated precipitate was washed twice using a mixture of 70 ml of distilled water and 70 ml of cyclohexanol. Then, it was additionally washed using 140 ml of cyclohexanol, and the washed precipitate was dried in a vacuum oven at 80°C for 12 hours to finally obtain 6.2 g of a double metal cyanide catalyst.

### Example 1

11 mg of the double metal cyanide catalyst prepared in the preparation example, 30 g of ethylene oxide, 10 g of dioxolane solvent, and 5 g of maleic anhydride were placed in a high-pressure reactor. Then, carbon dioxide was injected into the reactor and pressurized to 30 bar. The polymerization reaction was performed at 75°C for 24 hours, and after the reaction was completed, unreacted carbon dioxide was removed, and a polymer including a polyethylene carbonate-based resin was prepared. Thereafter, it was diluted with a dioxolane solvent so that the solid content of the polyethylene carbonate-based resin in the polymer became 20 wt%, and then 0.1 part by weight of citric acid was added based on 100 parts by weight of the polyethylene carbonate-based resin solid content to deactivate the remaining catalyst, stirred, and poured into a tray, followed by drying in a vacuum oven at 40°C for 6 hours to produce a polyethylene carbonate-based resin. 6 g of the produced resin was put into a micro twin extruder (HAAKE Mini CTW, Thermo Scientific), kept at 170°C for 20 minutes, and then extruded.

### Example 2

A polyethylene carbonate-based resin was produced in the same manner as in Example 1, except that 0.1 weight part of antioxidant (Irganox 1010, BASF) together with the citric acid was further added relative to 100 weight parts of the polyethylene carbonate-based resin solid content.

Example 3

A polyethylene carbonate-based resin was produced in the same manner as in Example 1, except that 10 g of maleic anhydride was added.

Example 4

A polyethylene carbonate-based resin was produced in the same manner as in Example 1, except that 0.66 g of maleic anhydride was added.

### Comparative Example 1

A polyethylene carbonate-based resin was produced in the same manner as in Example 1, except that no maleic anhydride was added.

### Comparative Example 2

The same process as in Comparative Example 1 was performed, but 1 g of maleic anhydride was mixed with 6 g of

the polyethylene carbonate-based resin before being put into the micro twin extruder, and then the mixture was put into the micro twin extruder and extruded under the same conditions to produce a polyethylene carbonate-based resin terminal-capped with maleic anhydride.

## Experimental Example

The polymerization chain structure analysis, melt index, mass loss rate, glass transition temperature, thermal decomposition temperature, and crosslinking rate of the polyalkylene carbonate-based resins produced in the above examples and comparative examples were measured. The results were shown in Table 1 below, and FIGS. 1 to 3.

(1) Structure Analysis

The polymerization chain structure analysis of the resin was measured by dissolving 10 mg of the polyalkylene carbonate-based resin sample in a chloroform-d6 solvent using a $^1$H-NMR spectrometer (500 MHz Spectrometer, Jeol), and the results were shown in FIG. 1.

(2) Melt Index (g/10 min)

The melt index was measured using a melt flow indexer (MFI), and was measured under the conditions of 190°C and 6.835 kg according to ASTM D1238, and the discharge amount was calculated as g/10min. More specifically, an evaluation material was placed in a piston heated to the above temperature using a MFI (QM280A, QMESYS), and the piston was placed in position to apply the above weight load. After 4 minutes, the discharge amount was cut off, and the discharge amount was cut off again 4 times every 30 seconds, and the average value was confirmed. The results were shown in Table 1.

(3) Thermal Decomposition Temperature ($Td_{50}$, °C) and Mass Loss Rate (weight%)

The thermal decomposition temperature and mass loss rate were measured using a TGA (thermogravimetric analyzer), and specifically, a temperature at a time point at which the mass decreased by 50% while increasing the temperature (10°C/min) from 30°C to 400°C was measured using the TGA (TGA2, Mettler Toledo). The mass change rate was measured using a TGA, similar to the thermal decomposition temperature, and the mass change rate when stored for 60 minutes under an isothermal condition of 240°C was confirmed. The measurement results were shown in Table 1, FIG. 2, and FIG. 3.

(4) Glass Transition Temperature (°C)

The glass transition temperature was measured using a DSC (differential scanning calorimeter), and specifically, was measured in a nitrogen atmosphere while heating the sample from -40°C to 250°C (10°C/min) using the DSC (Q20, TA instrument). The Tg (glass transition temperature) was confirmed based on the endothermic curve results. The results were shown in Table 1.

(5) Crosslinking Degree (%)

The crosslinking degree analysis was conducted for 24 hours under chloroform solvent conditions using a Soxhlet extractor by a solvent extraction method, and after removing the solvent, the crosslinking degree was calculated as the weight ratio of the sample after extraction to the sample before extraction. The results were shown in Table 1. Meanwhile, the measurement was omitted in the section marked with a -(hyphen) in Table 1 below.

[Table 1]

| Division | Example | | | | Comparative example | |
|---|---|---|---|---|---|---|
| | 1 | 2 | 3 | 4 | 1 | 2 |
| Melt index (g/10min) | 2.0 | 8.1 | - | 1.9 | - | 30.7 |
| Mass loss rate (weight%) | 49 | 47 | 12 | - | 89 | 86 |
| Thermal decomposition temperature ($Td_{50}$, °C) | 304 | 312 | 378 | - | 281 | 287 |
| Glass transition temperature (°C) | 8.8 | 18.2 | - | 12.5 | 3.9 | 2.1 |

(continued)

| Division | Example | | | | Comparative example | |
|---|---|---|---|---|---|---|
| | 1 | 2 | 3 | 4 | 1 | 2 |
| Crosslinking degree (%) | 12 | 8 | - | 5 | <0 | < 0 |

As can be seen from Table 1 above, both Comparative Example 1, which did not use maleic anhydride, and Comparative Example 2, which was terminally capped with maleic anhydride, exhibited higher melt index, higher mass loss rate, lower thermal decomposition temperature, and lower glass transition temperature, compared to the polyalkylene carbonate-based resin produced in the examples of the present invention. That is, this means that the examples of the present invention, which introduced maleic anhydride into the polymer chain, exhibited better thermal stability and processability compared to Comparative Example 2, which was terminally capped with maleic anhydride.

In addition, in terms of crosslinking degree, the polyalkylene carbonate-based resin produced in the examples of the present invention exhibited higher values than the polyalkylene carbonate-based resin of the comparative examples, which means that the introduced maleic anhydride-derived unit formed a polymer network crosslinked with the polymer chains whose terminals were activated, thereby improving the thermal stability of the polymer chain structure.

## Claims

**1.** A polyalkylene carbonate-based resin comprising:

a repeating unit represented by Chemical Formula 1 below;
a repeating unit represented by Chemical Formula 2 below; and
a maleic anhydride-derived unit,
wherein the polyalkylene carbonate-based resin has a peak in the region of 6.3 ppm to 6.7 ppm in a $^1$H NMR spectrum:

[Chemical Formula 1]

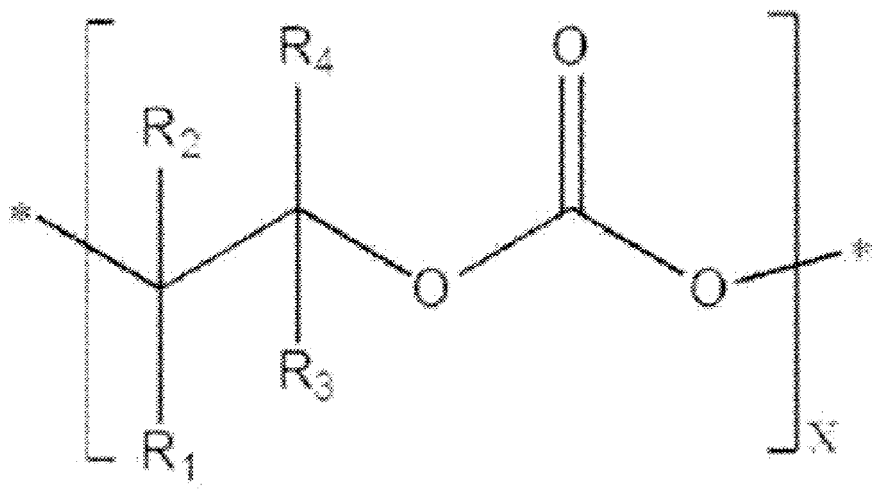

[Chemical Formula 2]

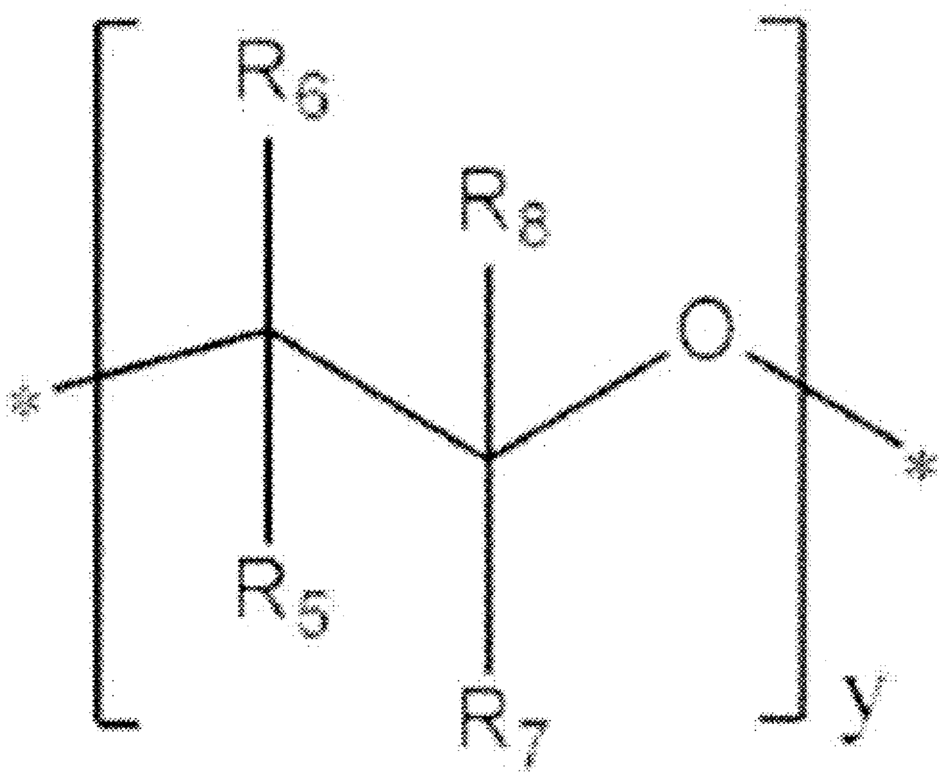

wherein:

$R_1$ to $R_8$ are each independently hydrogen, a linear alkyl group having 1 to 20 carbon atoms, a branched alkyl group having 3 to 20 carbon atoms, an aryl group having 6 to 20 carbon atoms, an alkenyl group having 2 to 20 carbon atoms, or a cycloalkyl group having 3 to 20 carbon atoms,
* denotes a linking site between repeating units, and
x and y are mole fractions, wherein x is 0.70 to 1.00, y is 0.00 to 0.30, and x+y is 1.

2. The polyalkylene carbonate-based resin according to claim 1, **characterized in that** the melt index measured under the conditions of 190°C and 6.835 kg according to ASTM D1238 is 1 g/10 min or more and 25 g/10 min or less.

3. The polyalkylene carbonate-based resin according to claim 1, **characterized in that** the mass change rate when stored at 240°C for 60 minutes is 80 wt% or less.

4. The polyalkylene carbonate-based resin according to claim 1, **characterized in that** the glass transition temperature is -10°C or more and 50°C or less.

5. The polyalkylene carbonate-based resin according to claim 1, **characterized in that** the thermal decomposition temperature (Td50) is 290°C or more.

6. The polyalkylene carbonate-based resin according to claim 1, wherein the maleic anhydride-derived unit is included in an amount of 1 to 50 parts by weight based on 100 parts by weight of the polyalkylene carbonate-based resin.

7. A polyalkylene carbonate-based resin composition comprising: the polyalkylene carbonate-based resin according to any one of claims 1 to 6; and an antioxidant.

8. The polyalkylene carbonate-based resin composition according to claim 7, wherein the antioxidant is at least one selected from the group consisting of tetrakis[methylene-3-(3,5-di-t-butyl-4-hydroxyphenyl)propionate]methane, triethylene glycol-bis-3-(3-t-butyl-4-hydroxy-5-methylphenyl)propionate, thiodiethylenebis[3-(3,5-di-t-butyl-4-hydroxyphenyl)propionate], 1,2-bis(3,5-di-t-butyl-4-hydroxyhydrocinnamoyl)hydrazine, octadecyl 3-(3,5-di-t-butyl-4-hydroxyphenyl)propionate, 1,3,5-tris(4-t-butyl-3-hydroxy-2,6-dimethylbenzyl)-1,3,5-triazine-2,4,6-(1H,3H,5H)-trione, 2,4-di-t-pentyl-6-(1-(3,5-di-t-pentyl-2-hydroxyphenyl)ethyl)phenyl acrylate, 1,3,5-trimethyl-2,4,6-tris(3,5-di-t-butyl-4-hydroxybenzyl)benzene, α-tocopherol and 2,6-di-t-butyl-p-cresol.

**9.** The polyalkylene carbonate-based resin composition according to claim 7, wherein the antioxidant is included in an amount of 0.01 to 3.00 parts by weight based on 100 parts by weight of the polyalkylene carbonate-based resin.

**10.** A method for producing a polyalkylene carbonate-based resin, including a step of polymerizing an alkylene oxide compound, carbon dioxide, and maleic anhydride in a solvent in the presence of a catalyst.

**11.** The method for producing a polyalkylene carbonate-based resin according to claim 10, wherein the maleic anhydride is used in an amount of 0.1 to 25 parts by weight relative to 100 parts by weight of the alkylene oxide compound.

**12.** The method for producing a polyalkylene carbonate-based resin according to claim 10, wherein the polymerization is performed at a temperature of 30°C to 120°C within 24 hours.

**13.** The method for producing a polyalkylene carbonate-based resin according to claim 10, wherein the catalyst comprises a double metal cyanide compound and a complexing agent.

**14.** The method for producing a polyalkylene carbonate-based resin according to claim 13, wherein the double metal cyanide compound comprises a metal cyanide complex salt-derived component and a metal salt-derived component,

wherein the metal cyanide complex salt is represented by Chemical Formula 3 below, and
the metal salt is represented by Chemical Formula 4 below:

[Chemical Formula 3] $Y_aM'(CN)_b$

wherein:

M' is at least one selected from the group consisting of Fe(II), Fe(III), Co(II), Co(III), Cr(II), Cr(III), Mn(II), Mn(III), Ir(III), Ni(II), Rh(III), Ru(II), V(V), and V(IV),
Y is an alkali metal ion or an alkaline earth metal ion,
a is an integer from 1 to 4, b is an integer from 4 to 6, and the values of a and b are selected such that the metal cyanide complex salt is electrically neutral,

[Formula 4] $M(X)_n$

wherein:

M is at least one selected from the group consisting of Zn(II), Fe(II), Ni(II), Mn(II), Co(II), Sn(II), Pb(II), Fe(III), Mo(IV), Mo(VI), Al(III), V(V), V(IV), Sr(II), W(IV), W(VI), Cu(II), and Cr(III),
X is any one anion selected from the group consisting of halides, hydroxides, sulfates, carbonates, cyanates, oxalates, thiocyanates, isocyanates, isothiocyanates, carboxylates, and nitrates,
n is a number satisfying the valence state of M.

**15.** The method for producing a polyalkylene carbonate-based resin according to claim 13, wherein the metal cyanide complex salt is potassium hexacyanocobaltate(III), potassium hexacyanoferrate(II), potassium hexacyanoferrate(III), calcium hexacyanocobaltate(III), or lithium hexacyanoiridate(III).

**16.** The method for producing a polyalkylene carbonate-based resin according to claim 13, wherein the metal salt is at least one selected from the group consisting of zinc(II) chloride, zinc(III) chloride, zinc bromide, zinc iodide, zinc acetate, zinc acetylacetonate, zinc benzoate, zinc nitrate, iron(II) sulfate, iron(II) bromide, cobalt(II) chloride, cobalt(II) thiocyanate, nickel(II) formate, and nickel(II) nitrate.

**17.** The method for producing a polyalkylene carbonate-based resin according to claim 13, wherein the complexing agent is at least one selected from the group consisting of cyclobutanol, cyclopentanol, cyclohexanol, cycloheptanol, cyclooctanol, 1-methyl cyclopentanol, 2-methyl cyclopentanol, 3-methyl cyclopentanol, 1-ethyl cyclopentanol, 2-ethyl cyclopentanol, 3-ethyl cyclopentanol, 1-propyl cyclopentanol, 2-propyl cyclopentanol, 3-propyl cyclopentanol, 1-butyl cyclopentanol, 2-butyl cyclopentanol, 3-butyl cyclopentanol, 1-isopropyl cyclopentanol, 2-isopropyl cyclopentanol, 3-isopropyl cyclopentanol, 1-(propan-2-yl) cyclopentanol, 2,2-dimethyl cyclopentanol, 2,3-dimethyl cyclopentanol, 3,3-dimethyl cyclopentanol, 1,2-dimethyl cyclopentanol, 1,3-dimethyl cyclopentanol, 1-methyl cyclohexanol, 1-ethyl cyclohexanol, 1-propyl cyclohexanol, 1-butyl cyclohexanol, 2-methyl-1-cyclohexanol, 2-ethyl-1-cyclohexanol, 3-ethyl-1-cyclohexanol, 4-ethyl-1-cyclohexanol, 2-Propyl-1-cyclohexanol, 3-propyl-1-cyclohexanol, 4-propyl-1-cyclohexanol, 2-butyl-1-cyclohexanol, 3-butyl-1-cyclohexanol, 4-butyl-1-cyclohexanol, 2-isopropyl-1-cyclohexanol, 3-isopropyl-1-cyclohexanol, 4-isopropyl-1-cyclohexanol, 2-tert-butyl-1-cyclohexanol, 3-tert-butyl-1-cyclohexanol, 4-tert-butyl-1-cyclohexanol, 2,3-dimethyl-1-cyclohexanol, 2,4-dimethyl-1-cyclohexanol, 3,4-dimethyl-1-cyclohexanol, 1-methyl cycloheptanol, 2-methyl cycloheptanol, 3-methyl cycloheptanol, and 4-methyl cycloheptanol.

[FIG. 1]

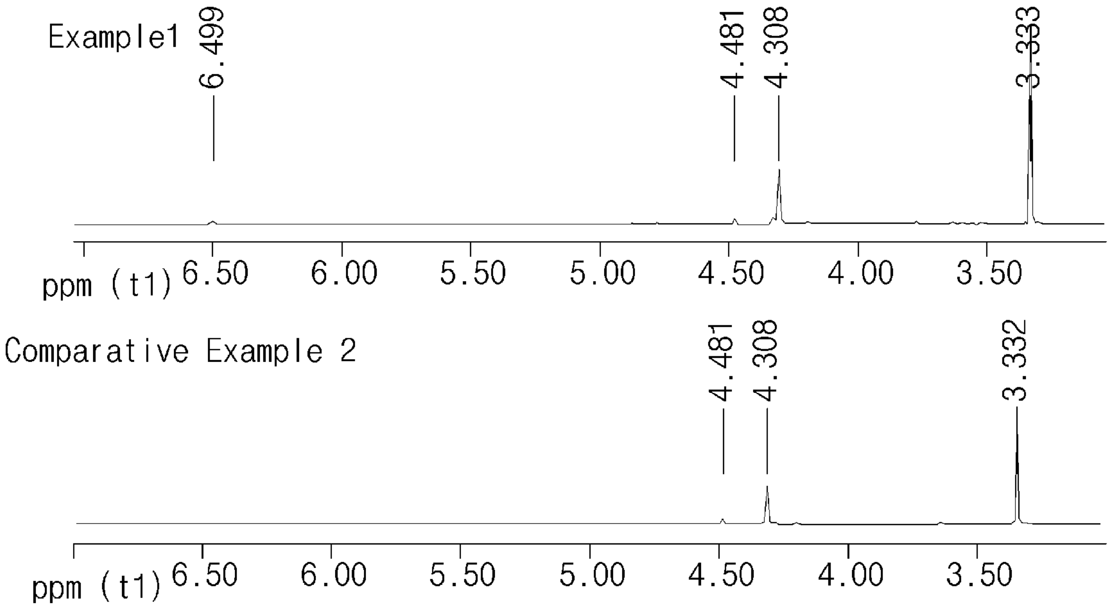
Example1
6.499
4.481
4.308
3.333
ppm (t1) 6.50 6.00 5.50 5.00 4.50 4.00 3.50
Comparative Example 2
4.481
4.308
3.332
ppm (t1) 6.50 6.00 5.50 5.00 4.50 4.00 3.50

[FIG. 2]

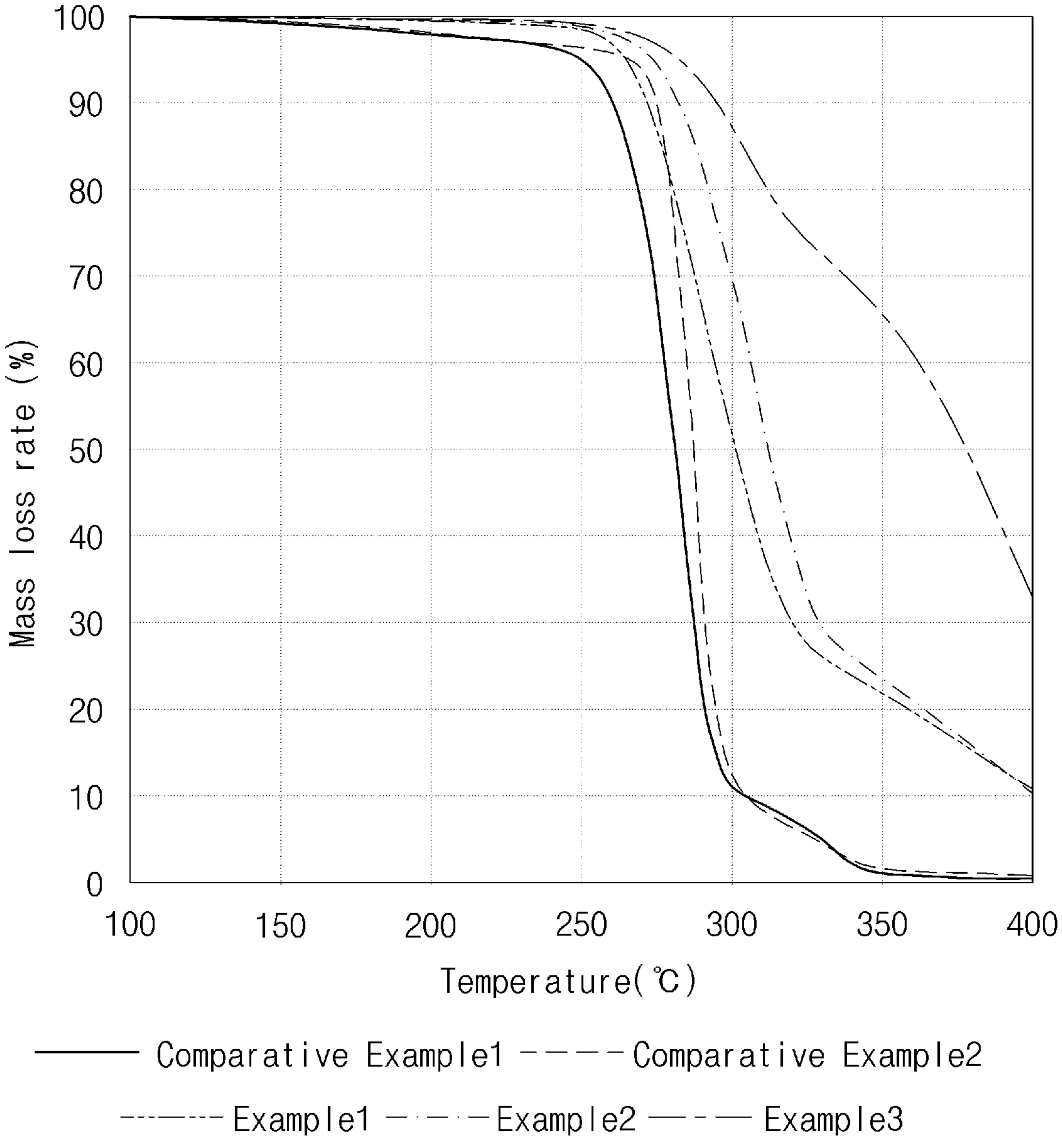
100
90
80
70
60
50
40
30
20
10
0
Mass loss rate (%)
100
150
200
250
300
350
400
Temperature(℃)
Comparative Example1
Comparative Example2
Example1
Example2
Example3

[FIG. 3]

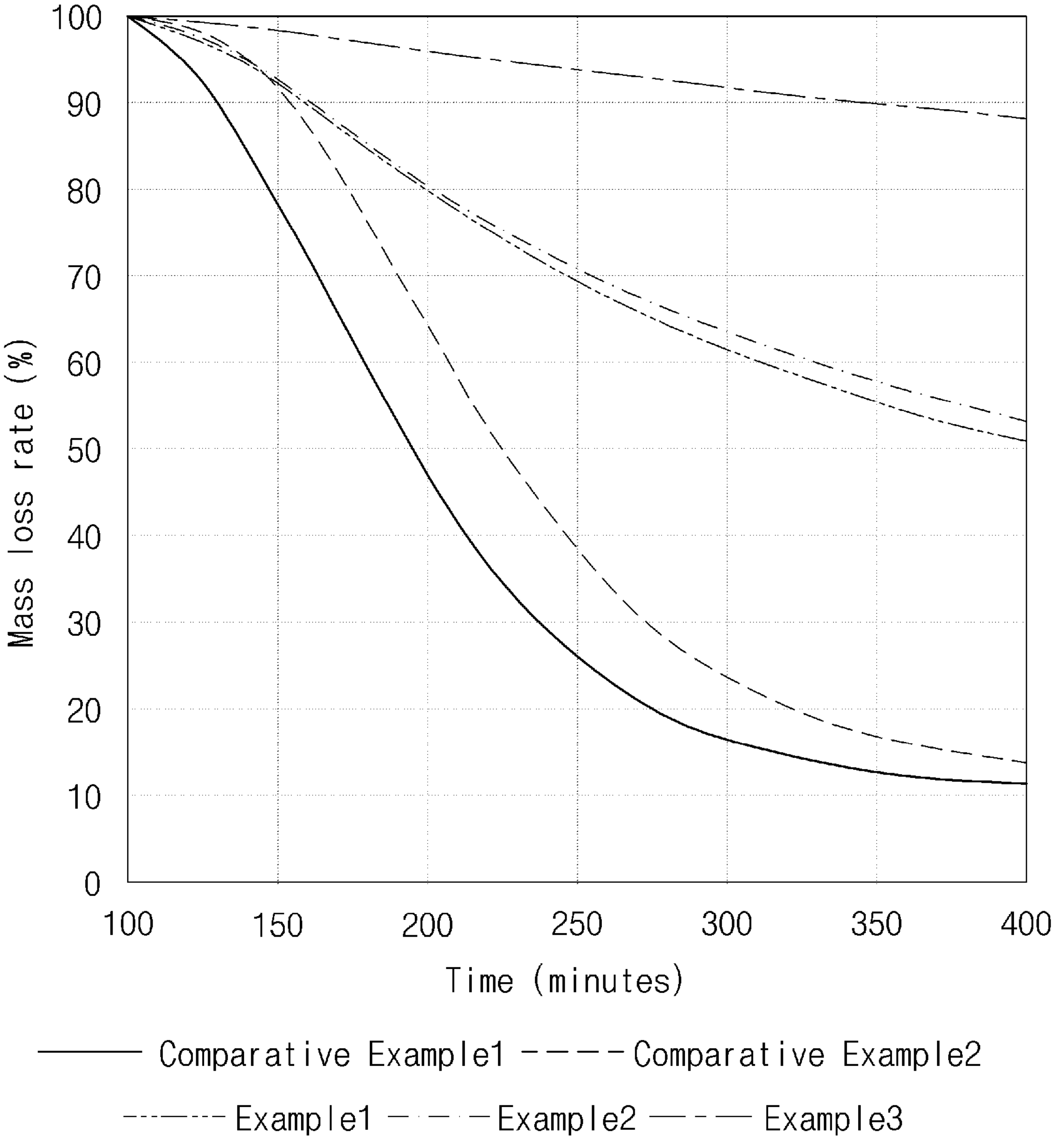
100
90
80
70
60
50
40
30
20
10
0
Mass loss rate (%)
100
150
200
250
300
350
400
Time (minutes)
Comparative Example1
Comparative Example2
Example1
Example2
Example3

## INTERNATIONAL SEARCH REPORT

International application No.
**PCT/KR2024/019235**

**A. CLASSIFICATION OF SUBJECT MATTER**

**C08G 64/34**(2006.01)i; **C08L 69/00**(2006.01)i; **C08K 5/00**(2006.01)i; **C08G 65/26**(2006.01)i

According to International Patent Classification (IPC) or to both national classification and IPC

**B. FIELDS SEARCHED**

Minimum documentation searched (classification system followed by classification symbols)

C08G 64/34(2006.01); C07D 493/04(2006.01); C08G 59/68(2006.01); C08G 63/66(2006.01); C08G 63/91(2006.01); C08G 64/02(2006.01); C08G 64/18(2006.01); C08G 64/40(2006.01); C08G 67/02(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal), STN (Registry, Caplus) & keywords: 알킬렌 옥사이드(alkylene oxide), 이산화탄소(carbon dioxide), 말레산 무수물(maleic anhydride), 폴리알킬렌카보네이트(polyalkylene carbonate)

**C. DOCUMENTS CONSIDERED TO BE RELEVANT**

| Category* | Citation of document, with indication, where appropriate, of the relevant passages | Relevant to claim No. |
|---|---|---|
| X | KR 10-2014-0113644 A (BAYER INTELLECTUAL PROPERTY GMBH) 24 September 2014 (2014-09-24) See example 1; paragraphs [0034], [0042], [0082]-[0143], [0158], [0176]-[0180], [0184], [0185], [0190], [0192] and [0233]-[0240]; and claims 1 and 10. | 1-6,10-17 |
| Y | | 7-9 |
| Y | KR 10-2022-0117285 A (ASAHI KASEI KABUSHIKI KAISHA) 23 August 2022 (2022-08-23) See claim 13; and paragraphs [0146], [0148] and [0152]. | 7-9 |
| A | KR 10-2023-0046237 A (LG CHEM, LTD.) 05 April 2023 (2023-04-05) See claims 1-17. | 1-17 |
| A | US 2014-0155573 A1 (SOLER, C. B. et al.) 05 June 2014 (2014-06-05) See claims 1-21. | 1-17 |

☑ Further documents are listed in the continuation of Box C. ☑ See patent family annex.

* Special categories of cited documents:
"A" document defining the general state of the art which is not considered to be of particular relevance
"D" document cited by the applicant in the international application
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **05 March 2025** | **05 March 2025** |

| Name and mailing address of the ISA/KR | Authorized officer |
|---|---|
| **Korean Intellectual Property Office Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

INTERNATIONAL SEARCH REPORT

International application No.
PCT/KR2024/019235

C. DOCUMENTS CONSIDERED TO BE RELEVANT

| Category* | Citation of document, with indication, where appropriate, of the relevant passages | Relevant to claim No. |
|---|---|---|
| A | US 2011-0218321 A1 (STEINKE, T. H. et al.) 08 September 2011 (2011-09-08) See claims 1-11. | 1-17 |

Form PCT/ISA/210 (second sheet) (July 2022)

**INTERNATIONAL SEARCH REPORT**
**Information on patent family members**

International application No.
**PCT/KR2024/019235**

| Patent document cited in search report | Publication date (day/month/year) | Patent family member(s) | Publication date (day/month/year) |
|---|---|---|---|
| KR 10-2014-0113644 A | 24 September 2014 | CN 103372287 A | 30 October 2013 |
| | | CN 103372287 B | 18 November 2015 |
| | | CN 103998489 A | 20 August 2014 |
| | | CN 103998489 B | 16 January 2018 |
| | | EP 2604641 A1 | 19 June 2013 |
| | | EP 2791205 A2 | 22 October 2014 |
| | | EP 2791205 B1 | 22 August 2018 |
| | | JP 2015-500380 A | 05 January 2015 |
| | | JP 6169600 B2 | 26 July 2017 |
| | | KR 10-2046514 B1 | 20 November 2019 |
| | | US 2014-0329987 A1 | 06 November 2014 |
| | | US 9296859 B2 | 29 March 2016 |
| | | WO 2013-087582 A2 | 20 June 2013 |
| | | WO 2013-087582 A3 | 17 October 2013 |
| KR 10-2022-0117285 A | 23 August 2022 | CN 114945619 A | 26 August 2022 |
| | | EP 4092068 A1 | 23 November 2022 |
| | | EP 4092068 A4 | 26 April 2023 |
| | | JP 2021-145443 A1 | 22 July 2021 |
| | | JP 7284296 B2 | 30 May 2023 |
| | | US 2023-0192949 A1 | 22 June 2023 |
| | | WO 2021-145443 A1 | 22 July 2021 |
| KR 10-2023-0046237 A | 05 April 2023 | CN 116848175 A | 03 October 2023 |
| | | EP 4273183 A1 | 08 November 2023 |
| | | EP 4273183 A4 | 17 July 2024 |
| | | US 2024-0141103 A1 | 02 May 2024 |
| | | WO 2023-054999 A1 | 06 April 2023 |
| US 2014-0155573 A1 | 05 June 2014 | CN 103842406 A | 04 June 2014 |
| | | CN 103842406 B | 02 November 2016 |
| | | EP 2731981 A1 | 21 May 2014 |
| | | EP 2731981 B1 | 31 August 2016 |
| | | US 9340646 B2 | 17 May 2016 |
| | | WO 2013-007759 A1 | 17 January 2013 |
| US 2011-0218321 A1 | 08 September 2011 | None | |

Form PCT/ISA/210 (patent family annex) (July 2022)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- KR 1020230173506
- CN 103842406 B